# EUROPÄISCHE PATENTANMELDUNG

(11) **EP 2 014 497 A1**
(43) Veröffentlichungstag der Anmeldung: **14.01.2009**
(21) Anmeldenummer: 08011756.7
(22) Anmeldetag: 28.06.2008
(51) Int. Cl.: B60J 7/12, B60J 7/14

(54) **Bewegliches Dach für einen Personenkraftwagen**

(30) Priorität: 13.07.2007 DE 102007032674
(71) Anmelder: Magna Car Top Systems GmbH, 74321 Bietigheim-Bissingen (DE)
(72) Erfinder: Halbweiss, Thomas, Dipl.-Ing., 71686 Remseck (DE)

(57) **Zusammenfassung**

Dieses bewegliche Dach (5) ist für den Einbau in einen Personenkraftwagen (1) geeignet. Das Dach (5) ist Bestandteil eines Aufbaus (2) und aus einer einen Fahrgastraum (6) umgebenden Schließstellung in eine in einem Aufbewahrungsraum abgelegte Offenstellung verstellbar und vice versa, wobei das Dach (5) mehrere einen Formabschnitt einer Außenhautkontur des Aufbaus bildende Dachglieder (8,9,10,11) umfasst, wovon zumindest ein Dachglied (9) über ein Hauptlenkersystem (15,16) am Aufbau (2) gelagert ist, welche Dachglieder in der Offenstellung übereinanderliegend im Aufbewahrungsraum angeordnet sind.

Zur Optimierung von baulichen Gegebenheiten und Funktion des Dachs wirkt -in der Schließstellung des Dachs gesehen- ein zwischen einem vorderen Dachglied (9) und einem hinteren Dachglied (11) eingesetztes mittleres Dachglied (10) unter Zwischenschaltung einer mehrere Steuerlenker (27,28,29) umfassenden Lenkervorrichtung (26) mit dem Hauptlenkersystem (15,16) zusammen.

## Beschreibung

Die Erfindung bezieht sich auf ein bewegliches Dach für einen Personenkraftwagen, das Bestandteil eines Aufbaus und aus einer einen Fahrgastraum umgebenden Schließstellung in eine in einem Aufbewahrungsraum abgelegte Schließstellung verstellbar und vice versa ist, nach dem Oberbegriff des Patentanspruchs 1.

Es ist eine bewegliches Dach bekannt JP 02306822 A, das mehrere -in Fahrzeuglängsrichtung betrachtet- hintereinander liegende vordere und hintere Dachglieder aufweist. Diese Dachglieder sind als formsteife Elemente ausgeführt und sind in einer Schließstellung des Dachs mit geringem Abstand an einander zugekehrten Seiten zusammengesetzt und verleihen, weil nach Art eines großflächigen Spriegels wirkend, einem flexiblen Verdeckbezug eine definierte weitgehend von Unebenheiten freie Dachaußenhautkontur. Das hintere Dachglied ist unter Vermittlung eines Hauptlenkersystems, umfassend einen vorderen Hauptlenker und einen hinteren Hauptlenker, die eine erste Viergelenkkinematik bilden, am Aufbau gelagert. Das vordere Dachglied ist über eine zweite Viergelenkinematik, die einen vorderen Lenker und eine hinteren Lenker aufweist, am hintern Dachglied angelenkt. Zwischen dem hinteren Lenker der zweiten Viergelenkkinematik und dem hintern Hauptlenker der ersten Viergelenkkinematik ist ein Koppellenker vorgesehen. An das hintere Dachglied ist ein Heckteil angeschlossen, das mit einer Sichtscheibe versehen ist. In der Offenstellung des Dachs liegt das vordere Dachglied oberhalb des hinteren Dachglieds.

Aus der DE 100 06 296 C1 geht ein umwandelbares Fahrzeugdach mit einem Hauptdachelement und weiteren Dachelementen hervor, die miteinander bewegbar verbunden sind. Das Hauptdachelement ist mit einer Hauptlagereinrichtung verbunden, über die das Hauptdachelement schwenkbar an einer Karosserie gelagert ist. Das Hauptdachelement und das an letzteres gekoppelte Dachelement werden beim Öffnungsvorgang des Fahrzeugdachs in eine Ablagestellung überführt. Bei dem besagten Fahrzeugdach tragen drei Dachelemente zur Bildung des Dachs bei, wobei das als mittleres Dachelement dargestellte Hauptdachelement von einem vorderen Dachelement und einem hinteren Dachelement begrenzt wird. Das Hauptdachelement ist karosserieseitig unter Vermittlung eines Viergelenkgetriebes angelenkt. Ebenfalls mittels eines Viergelenkgetriebes wird das vordere Dachelement bewegt. An das hintere Dachelement ist ein Heckdachelement angeschlossen, das mit einem horizontalen Dachabschnitt und einem aufrechten Dachabschnitt versehen ist. Sofern das Dach abgesenkt ist, sind das Heckdachelement oberhalb des vorderen Dachelements, das mittlere Dachelement unterhalb des vorderen Dachelements und das hintere Dachelement unterhalb des mittleren Dachelements angeordnet.

In der DE 44 41 666 C1 wird ein Faltverdeck für ein Fahrzeug, insbesondere Personenkraftwagen, beschrieben, das aus einer einen Fahrgastraum überspannenden Schließstellung in eine heckseitige Ablagestellung bewegbar ist. Das Faltverdeck umfasst ein Verdeckgestell und einen Verdeckbezug, das einen formsteifen Verdeckabschnitt aufweist. Der Verdeckabschnitt grenzt an einen Querabschnitt eines Windschutzscheibenrahmens an und ist an seinen Längsseiten jeweils mit einem vorderen Lenker und einem hinteren Lenker verbunden, die beabstandet hierzu direkt am Aufbau bzw. einem Zwischenlenker angelenkt sind. Eine ähnliche Ausführung -Verdeckabschnitt spannt Verdeckbezug in eine Dachformstellung- zeigt darüber hinaus die DE 196 22 953 C1.

Gemäß der DE 100 41 487 ist ein Faltverdeck für einen Personenkraftwagen mit einer versenkbaren Heckscheibe versehen, die in einen Rahmen eingesetzt ist. Die Heckscheibe ist in einem rückwärtigen Bereich etwa auf Höhe einer Gürtellinie gelenkig mit dem Aufbau verbunden. Zur Bewegung der Heckscheibe sind Lenkhebel vorgesehen, die einerseits am Rahmen der Heckscheibe und andererseits an einem Spannspriegel gelagert sind.

Es ist Aufgabe der Erfindung ein zwischen einer Schließstellung und einer Offenstellung bewegbares Dach für einen Personenkraftwagen zu schaffen, das mehrere Dachglieder umfasst und das sich bei einfachem Aufbau durch gute

Funktion und räumlich günstige Verhältnisse, insbesondere in der Offenstellung, auszeichnet.

Nach der Erfindung wird diese Aufgabe durch die Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, dass durch das Zusammenwirken eines zwischen einem vorderen Dachglied und einem hinteren Dachglied eingesetzten mittleren Dachglieds mit einer mehrere Lenker aufweisenden Lenkervorrichtung mit einem Hauptlenkersystem eine musterhafte Bewegung gerade des mittleren Dachglieds zwischen Schließstellung und Offenstellung des Dachs sichergestellt ist. Dabei setzt die Anlenkung des mittleren Dachglieds am Hauptlenkersystem Maßstäbe in der Kinematik der Verdecktechnologie, insbesondere, weil dadurch eine vorbildliche Ablage des besagten mittleren Dachglieds oberhalb des hinteren Dachglieds realisierbar ist. Letzteres trägt zu einer räumlich vorteilhaften Ablagestellung des mittleren Dachglieds bei. Aber auch das Verbringen des mittleren Dachglieds aus der Dach-Offenstellung in die Dach-Schließstellung ist günstig, denn es wird dadurch eine gezielte Spannung eines oberhalb der Dachglieder liegenden Verdeckbezugs des beweglichen Dachs gewährleistet. Schließlich wird vorstehendes auch durch Art und Zahl der Steuerlenker und auch deren Anlenkung am mittleren Dachelement und am ersten Hauptlenker sowie am zweiten Hauptlenker des Hauptlenkersystems gezielt unterstützt.

In der Zeichnung wird ein Ausführungsbeispiel der Erfindung gezeigt, das nachstehend näher erläutert wird.

Es zeigen:
Fig. 1 eine schematische Schrägansicht auf ein bewegliches Dach eines Personenkraftwagens von hinten links oben,
Fig. 2 eine Seitenansicht des Personenkraftwagens mit dem beweglichen Dach in einer Schließstellung,
Fig. 3 eine Ansicht entsprechend Fig. 2 in kleinerem Maßstab, jedoch mit dem beweglichen Dach in einer ersten Zwischenstellung,
Fig. 4 eine Ansicht entsprechend Fig. 2 in kleinerem Maßstab, jedoch mit dem beweglichen Dach in einer zweiten Zwischenstellung,
Fig. 5 eine Ansicht entsprechend Fig. 2 in kleinerem Maßstab, jedoch mit dem beweglichen Dach in einer Offenstellung.

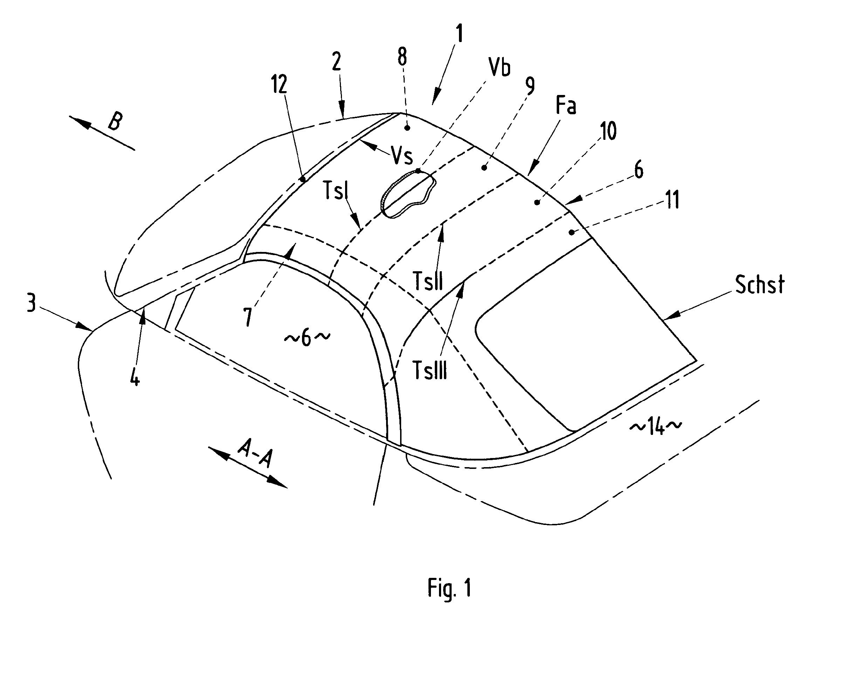

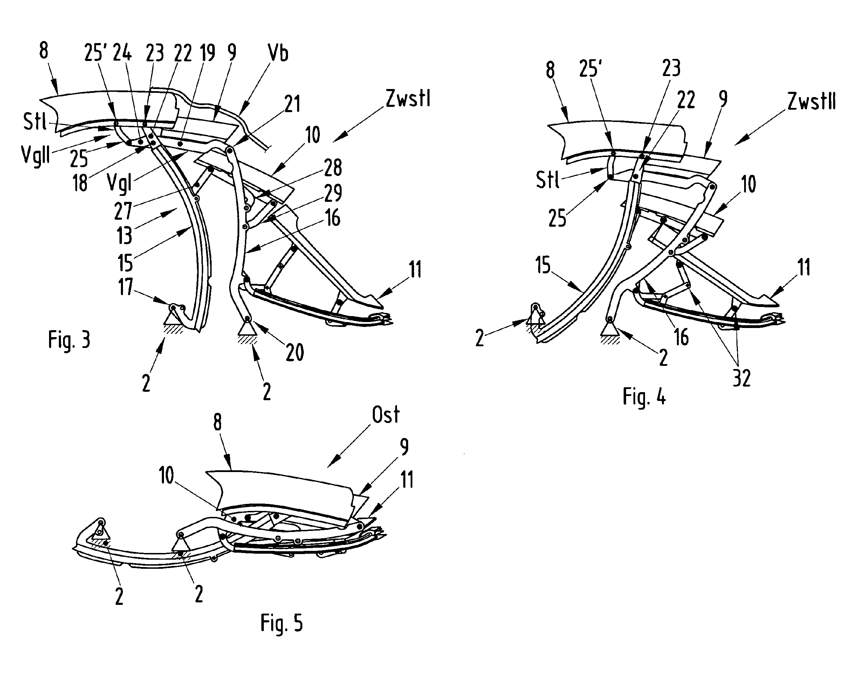

Ein Personenkraftwagen 1 weist einen Aufbau 2 mit Türen 3, einem Windschutzscheibenrahmen 4 und einem beweglichen Dach 5 -Softtopkategorieauf. Das Dach 5, ist aus einer einen Fahrgastraum 6 umgebenden Schließstellung Schst -Fig. 1- abgelegte Offenstellung Ost -Fig. 5.- und umgekehrt bewegbar. Das Dach 5 umfasst mehrere einen Formabschnitt Fa einer Außenhautkontur 7 des Aufbaus 2 bildende Dachglieder 8, 9, 10 und 11, die zumindest abschnittsweise einem flexiblen Verdeckbezug Vb eine der Außenhautkontur 7 entsprechende Form verleihen. Die Dachglieder 8, 9, 10 und 11 sind an quer zur Fahrzeuglängsrichtung A-A verlaufenden Trennstellen TsI, TsII und TsIII mit geringem Abstand zusammengesetzt und werden durch ein Frontdachglied 8, ein mittleres Dachglied 10, ein vorderes zwischen dem Frontdachglied 8 und dem mittleren Dachglied 10 liegendes Dachglied 9 und einem hinteren Dachglied 11 gebildet. Das Frontdachglied 8 wird mit seiner Vorderseite Vs an einen oberen Querrahmen 12 des Windschutzscheibenrahmens 4 herangeführt.

Das vordere Dachglied 9 und das Frontdachglied 8 sind über ein Hauptlenkersystem 13 am Aufbau 2 angelenkt. Die Anlenkung der Dachglieder 8, 9, 10 und 11 ist in der Weise ausgeführt, dass besagte Dachglieder in der Offenstellung Ost des Dachs 5 übereinanderliegend zueinander angeordnet sind. Dabei weisen Innenseiten IsI. IsII, IsIII und IsIV der Dachglieder 8, 9, 10 und 11 in Richtung C zu einer Fahrbahn -Zwiebelschalenschichtung- hin, und sie ruhen in einem Aufbewahrungsraum 14 in einem rückwärtigen Bereich des Aufbaus 2. Zwischen Schließstellung Schst und der Offenstellung Ost des Dachs 5 durchlaufen die Dachglieder 8, 9, 10 und 11 Zwischenstellungen ZwI und ZwII, wie sie in den Fig. 3 und 4 dargestellt sind.

Das Hauptlenkersystem 13 weist -in Fahrtrichtung gesehen B- einen ersten vorderen Hauptlenker 15 und einen zweiten hinteren Hauptlenker 16 auf. Der vordere Hauptlenker 15 ist unter Vermittlung eines ersten Gelenks 17 mit dem Aufbau 2 und eines zweiten Gelenks 18 mit einem in Längsrichtung des Dachs 5 ausgerichteten Gelenkträger 19 des vorderen Dachglieds 9 verbunden. Der Gelenkträger 19 ist Bestandteil des vorderen Dachglieds 9. Der hintere Hauptlenker 16 ist zum einen mittels eines dritten Gelenks 20 mit dem Aufbau 2 und zum anderen mit einem vierten Gelenk 21 an dem Gelenkträger 19 angelenkt. Das Steuerungssystem - vorderer Hauptlenker 15 und hinterer Hauptlenker 16- des vorderen Dachglieds 9 bildet ein erstes Viergelenk Vgl.

Um das Frontdachglied 8 zu bewegen ist ein zweites Viergelenk VglI vorgesehen. Hierzu ist der vordere Hauptlenker 15 mit einer über das zweite Gelenk 18 hinausragenden ersten Verlängerung 22 versehen, die mittels eines fünften Gelenks 23 am Frontdachglied 8 angebracht ist. Darüber hinaus ist an dem Gelenkträger 19 eine zweite Verlängerung 24 angeordnet, die sich zwischen dem zweite Gelenk 21 und einem sechsten Gelenk 25 des Frontdachglieds 8 erstreckt. Dazu arbeitet am Frontdachglied 8 zwischen dem sechsten Gelenk 25 und einem siebten Gelenk 25' ein Steuerlenker Stl.

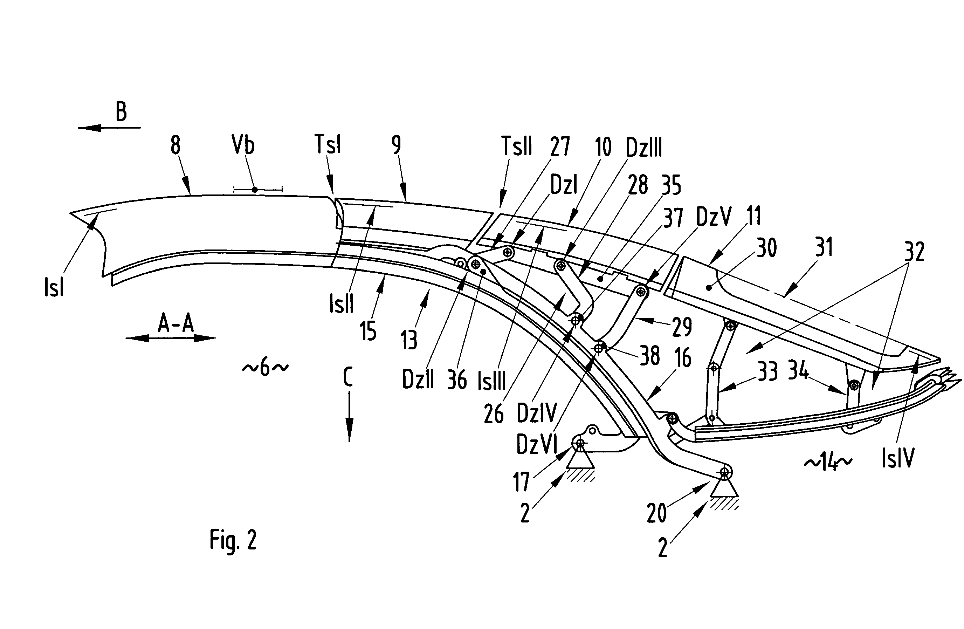

Das -in der Schließstellung Schst des Dachs 5 gesehen- zwischen dem vorderen Dachglied 9 und dem hinteren Dachglied 11 eingegliedert mittlere Dachglied 10 -Fig. 2- wirkt unter Vermittlung einer Lenkervorrichtung 26 mit dem Hauptlenkersystem 13 zusammen. Die Lenkervorrichtung 26 des mittleren Dachglieds 10 funktioniert mit ersten, zweiten und dritten Steuerlenkern 27, 28 und 29 in der Weise, dass besagtes mittlere Dachglied 10 in der Offenstellung Ost eine Ablagestellung Abst oberhalb des hinteren Dachglieds 11 einnimmt -Bewegungen Fig. 3 bis 5-, welches hintere Dachglied 11 eine von einem Heckscheibenrahmen 30 umgebene Heckscheibe 31 trägt. Der Heckscheibenrahmen 30 ist mittels eines Hebelwerks 32, umfassend in Fahrzeuglängsrichtung A-A beabstandete erste und zweite Hebelvorrichtungen 33 und 34, am Aufbau 2 beweglich gelagert.

Die ersten, zweiten und dritten Steuerlenker 27, 28 und 29 der Lenkervorrichtung 26 sind -in Fahrzeuglängsrichtung A-A betrachtet- am mittleren Dachelement 10 bzw. am ersten Hauptlenker 15 und am zweiten Hauptlenker 16 des Hauptlenkersystems 13 beweglich gelagert. Dazu ist der erste Steuerlenker 27 mittels eines ersten Drehzapfens Dzl am mittleren Dachelement 10 und eines zweiten Drehzapfens DzII am ersten Hauptlenker 15 angelenkt. Der zweite Steuerlenker 28 ist über einen dritten Drehzapfen DzIII mit dem mittleren Dachelement 10 und einem vierten Drehzapfen DzIV mit dem zweiten Hauptlenker 16 drehbar gekoppelt. Und: Der dritte Steuerlenker 29 ist einerseits mit einem fünften Drehzapfen DzV am mittleren Dachelement 10 und einem sechsten Drehzapfen DzVI am zweiten Hauptlenker 16 schwenkbeweglich angebracht. Zur Aufnahme der Steuerlenker 27, 28 und 29 am mittleren Dachelement 10 ist ein Lagerträger 35 vorgesehen, der in etwa die gleiche Länge wie das mittlere Dachelement 10 aufweist.

Günstige konstruktive Voraussetzungen werden geschaffen, wenn der erste Steuerlenker 27 gerade und die zweiten und dritten Steuerlenker 28 und 29 nach Art von Kniehebeln ausgeführt sind. Schließlich sind zur Anbringung der Steuerlenker 27, 28 und 29 die Hauptlenker 15 und 16 mit Lagervorrichtungen 36, 37 und 38 versehen, die aus einem Stück mit besagten Hauptlenkern 15 und 16 hergestellt sein können.

## Patentansprüche

1. Bewegliches Dach für einen Personenkraftwagen, das Bestandteil eines Aufbaus und aus einer einen Fahrgastraum umgebenden Schließstellung in eine in einem Aufbewahrungsraum abgelegte Offenstellung verstellbar und vice versa ist, wobei das Dach mehrere einen Formabschnitt einer Außenhautkontur des Aufbaus bildende Dachglieder umfasst, wovon zumindest ein Dachglied über ein Hauptlenkersystem am Aufbau gelagert ist, welche Dachglieder in der Offenstellung übereinanderliegend im Aufbewahrungsraum angeordnet sind, **dadurch gekennzeichnet, dass** -in der Schließstellung (Schst) des Dachs (5) gesehen- ein zwischen einem vorderen Dachglied (9) und einem hinteren Dachglied (11) eingesetztes mittleres Dachglied (10) unter Zwischenschaltung einer mehrere Steuerlenker (27, 28 und 29) umfassenden Lenkervorrichtung (26) mit dem Hauptlenkersystem (13) zusammenwirkt.

2. Bewegliches Dach nach Anspruch 1, **dadurch gekennzeichnet, dass** das mittlere Dachelement (10) über die Steuerlenker (27, 28 und 29) der Lenkervorrichtung (26) in der Offenstellung (Ost) des Dachs (4) eine Ablagestellung (Abst) oberhalb des hinteren Dachglieds (11) einnimmt.

3. Bewegliches Dach nach den Ansprüchen 1 und 2, **dadurch gekennzeichnet, dass** die Lenkervorrichtung (26) einen ersten Steuerlenker (27), einen zweiten Steuerlenker (28) und einen dritten Steuerlenker (29) aufweist.

4. Bewegliches Dach nach den Ansprüchen 1, 2 und 3, **dadurch gekennzeichnet, dass** die Steuerlenker (27, 28 und 29) der Lenkervorrichtung (26) -in Fahrzeuglängsrichtung (A-A) betrachtet- mit Abstand zueinander am mittleren Dachglied (10) bzw. an einem ersten Hauptlenker (15) und einem zweiten Hauptlenker (16) des Hauptlenkersystems (13) angeordnet sind.

5. Bewegliches Dach nach den Ansprüchen 3 und 4, **dadurch gekennzeichnet, dass** der erste Steuerlenker (27) der Lenkervorrichtung (26) zwischen dem mittleren Dachglied (10) und dem ersten Hauptlenker (15) des Hauptlenkersystems (13) wirksam ist.

6. Bewegliches Dach nach den Ansprüchen 3 und 4, **dadurch gekennzeichnet, dass** der zweite Steuerlenker (28) und der dritte Steuerlenker (29) der Lenkervorrichtung (26) zwischen dem mittleren Dachglied (10) und dem zweite Hauptlenker (16) wirksam sind.

7. Bewegliches Dach nach Anspruch 3, **dadurch gekennzeichnet, dass** die Steuerlenker (27, 28 und 29) der Lenkervorrichtung (26) am mittleren Dachglied (10) an einem Lagerträger (35) angebracht sind.

8. Bewegliches Dach nach einem oder mehreren der vorangehenden Ansprüche, **dadurch gekennzeichnet, dass** der erste Steuerlenker (27) der Lenkervorrichtung (26) weitgehend gerade ausgeführt ist.

9. Bewegliches Dach nach einem oder mehreren der vorangehenden Ansprüche, **dadurch gekennzeichnet, dass** der zweite Steuerhebel (28) und der dritte Steuerhebel (29) der Lenkervorrichtung (26) nach Art von Kniehebeln ausgeführt sind.

10. Bewegliches Dach nach einem oder mehreren der vorangehenden Ansprüche, **dadurch gekennzeichnet, dass** zur Aufnahme der Steuerhebel (27, 28 und 29) der Lenkervorrichtung (26) am Hauptlagersystem (13) Lagervorrichtungen (36, 37 und 38) vorgesehen sind.
